# EUROPEAN PATENT APPLICATION

(11) **EP 4 714 909 A1**
(43) Date of publication of application: **25.03.2026**
(21) Application number: 24835782.4
(22) Date of filing: 09.05.2024
(51) Int. Cl.: C02F 1/32, H01J 65/00

(54) **FLUID TREATMENT DEVICE**

(30) Priority: 04.07.2023 JP 2023109844
(71) Applicant: Ushio Denki Kabushiki Kaisha, Tokyo 100-8150 (JP)
(72) Inventor: FUJISAWA, Shigeki, Tokyo 100-8150 (JP)
(74) Representative: Maiwald GmbH
(86) International application number: PCT/JP2024/017248
(87) International publication number: WO 2025/009260

(57) **Abstract**

To extend the life of a fluid treatment device and peripheral devices located in the vicinity thereof. A fluid treatment device includes: a light-emitting tube; a light-emitting gas that is sealed in the light-emitting tube and emits an ultraviolet light having a wavelength of equal to or less than 200 nm by dielectric barrier discharge; a container that has a hole into which the light-emitting tube is inserted, houses a fluid to be treated with the ultraviolet light, and shields the ultraviolet light; a pair of electrodes disposed to sandwich the light-emitting gas; a base that fixes the light-emitting tube to the container in a state where the light-emitting tube is inserted into the hole; and a light-shielding material that prevents the ultraviolet light from leaking out of the container.

## Description

### TECHNICAL FIELD

The present invention relates to a fluid treatment device.

### BACKGROUND ART

High-purity water containing as little impurities as possible is indispensable in cleaning of semiconductors and precision equipment, pharmaceutical production, trace analysis equipment, and the like. For example, in substrate cleaning treatment in a manufacturing process of a semiconductor device, a large amount of pure water (also referred to as "ultrapure water") is used to rinse a chemical liquid or a detergent having a high concentration. In recent years, as miniaturization, densification, and integration of the circuit patterns advance in semiconductor devices, there is an increasing demand for improvement in the water quality of pure water. Pure water used in a cleaning process or the like is required to have an extremely low concentration of total organic carbon (TOC), which is one of water quality management items. This is because, if pure water contains a large amount of organic matter, there is a possibility that the organic matter is carbonized in a subsequent heat treatment process to cause insulation failure.

Against the background of increasing requirements for the water quality of pure water, in recent years, various methods have been studied in order to decompose and remove a minute amount of organic matter contained in the pure water. As one of such methods, there is a method of decomposing and removing organic matter contained in water by irradiating water with ultraviolet lights, and there has been developed a fluid treatment device configured to decompose and remove the organic matter (see Patent Document 1 below).

### PRIOR ART DOCUMENTS

### PATENT DOCUMENT

Patent Document 1: JP-A-2016-215119

### SUMMARY OF THE INVENTION

### PROBLEMS TO BE SOLVED BY THE INVENTION

The fluid treatment device is required to withstand use over a long period of time. The present inventors have found that when the fluid treatment device is used for a long period of time, there is a possibility that the fluid treatment device and peripheral devices located in the vicinity of the fluid treatment device deteriorate (Hereinafter, the fluid treatment device and the peripheral devices located in the vicinity of the fluid treatment device are collectively referred to as a "fluid treatment device and the like".). Therefore, it is an object of the present invention to suppress deterioration of a fluid treatment device and the like as much as possible to prolong the life of the fluid treatment device and the like.

### MEANS FOR SOLVING THE PROBLEMS

A fluid treatment device according to the present invention includes:
a light-emitting tube;
a light-emitting gas that is sealed in the light-emitting tube and emits an ultraviolet light having a wavelength of equal to or less than 200 nm by dielectric barrier discharge;
a container that has a hole into which the light-emitting tube is inserted, houses a fluid to be treated with the ultraviolet light, and shields the ultraviolet light;
a pair of electrodes disposed to sandwich the light-emitting gas;
a base that fixes the light-emitting tube to the container in a state where the light-emitting tube is inserted into the hole; and
a light-shielding material that prevents the ultraviolet light from leaking out of the container.

How the fluid treatment device has been created will be described. As a result of intensive studies, the present inventor has found that even if the container shields ultraviolet lights emitted from the light-emitting tube, there is a possibility that the ultraviolet lights leak out of the container through the hole for inserting the light-emitting tube. In particular, ultraviolet lights having a wavelength of equal to or less than 200 nm activate oxygen in the environment to generate ozone. When the ultraviolet lights having a wavelength of 200 nm or less are used as the ultraviolet lights used to irradiate a fluid, if the ultraviolet lights leak, oxygen in the atmosphere around the fluid treatment device is activated to generate ozone. By the fluid treatment device and the like being exposed to ozone for a long time, the fluid treatment device and the like are deteriorated. Therefore, a light-shielding material that shields the ultraviolet lights is provided separately from the container that shields the ultraviolet lights. The fluid treatment device prevents the ultraviolet lights from leaking from the fluid treatment device by using both the container that shields the ultraviolet lights and the light-shielding material disposed around the hole of the container. Therefore, ozone is not generated outside the fluid treatment device, and deterioration of the fluid treatment device and the like can be suppressed.

The light-emitting tube may be bonded to the base with an adhesive, and
the light-shielding material may be included in the adhesive.

The base may have a part of the base located between the adhesive and the container. When the adhesive comes into contact with water, there is a risk that components of the adhesive are eluted into water to increase the concentration of the total organic carbon (TOC) or the adhesive deteriorates. However, by having a part of the base located between the adhesive and the container, the adhesive is less likely to come into contact with water inside the container, and the risk is reduced.

The adhesive may be an inorganic adhesive. Even when the inorganic adhesive comes into contact with water, the inorganic adhesive does not elute in water and does not increase the TOC.

The light-emitting tube may be disposed across the inside and the outside of the container.

The pair of electrodes may be disposed to sandwich the fluid.

The pair of electrodes may include a first electrode located inside the light-emitting tube and a second electrode located outside the container.

The base and the container may have a sealing member provided between the base and the container.

### EFFECT OF THE INVENTION

According to the present invention, because deterioration of a fluid treatment device and the like can be suppressed, the fluid treatment device and the like having an extended service life can be provided.

### BRIEF DESCRIPTION OF THE DRAWINGS

Fig. 1 is a diagram illustrating a fluid treatment device according to a first embodiment.
Fig. 2 is an enlarged view of an A1 region in Fig. 1.
Fig. 3 is a diagram illustrating a fluid treatment device according to a second embodiment.
Fig. 4 is a diagram illustrating a fluid treatment device according to a third embodiment.
Fig. 5 is a diagram illustrating a fluid treatment device according to a fourth embodiment.
Fig. 6 is a diagram illustrating a fluid treatment device according to a modification of the fourth embodiment.
Fig. 7 is a diagram illustrating a fluid treatment device according to a fifth embodiment.
Fig. 8 is a diagram illustrating a fluid treatment device according to a first modification of the fifth embodiment.
Fig. 9 is a diagram illustrating a fluid treatment device according to a second modification of the fifth embodiment.

### MODE FOR CARRYING OUT THE INVENTION

A fluid treatment device according to the present invention is hereinafter described with reference to the drawings. Note that each of the drawings described below is schematically illustrated, and the number of constituents in the drawings does not necessarily coincide with the actual number of constituents.

Furthermore, the description below is provided under the assumption that a fluid to be treated is water, but a fluid to be treated that is applicable to the present invention is not limited to water. Specifically, any type of liquid, such as a liquid in which the decomposition and removal of a contained substance progresses or a liquid in which sterilization treatment progresses by being irradiated with ultraviolet lights, can be a target to be treated by the fluid treatment device according to the present invention. In addition, not only a liquid but also a gas or a gas-liquid mixture is a target to be treated.

### <First embodiment>

### [Outline of fluid treatment device]

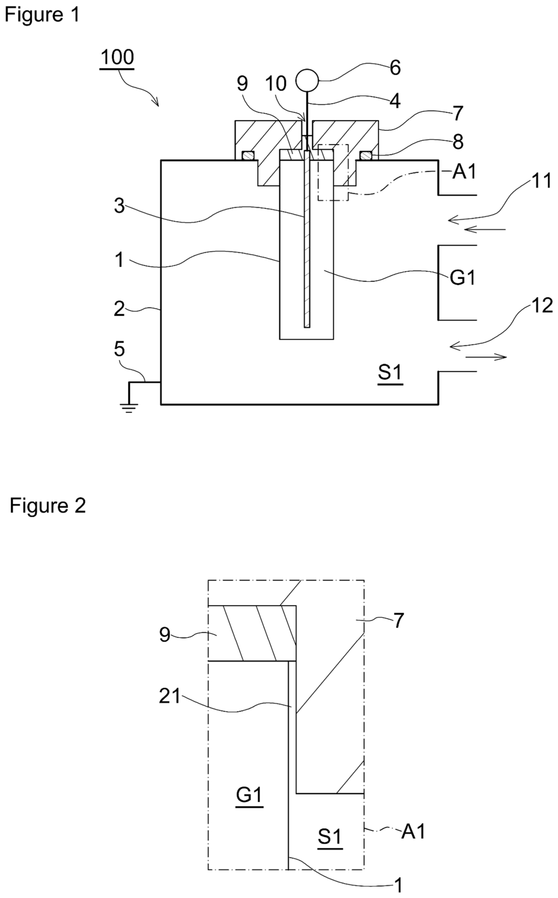

A first embodiment of a fluid treatment device will be described. Fig. 1 is a diagram illustrating a configuration of a fluid treatment device 100 according to the first embodiment. As illustrated in Fig. 1, the fluid treatment device 100 includes a light-emitting tube 1 that emits ultraviolet lights, and a container 2 that stores water to be treated with ultraviolet lights.

The container 2 has an inflow port 11 through which water flows into the container 2 and an outflow port 12 through which water in the container 2 is discharged. Water is fed into the container 2 from the inflow port 11 by a pump outside the fluid treatment device 100, and a space S1 inside the container 2 and outside the light-emitting tube 1 is filled with water. After the space S1 is filled with water, the light-emitting tube 1 is turned on and the water is irradiated with ultraviolet lights. The organic matter in the water irradiated with ultraviolet lights is decomposed, and the decomposed water is discharged from the outflow port 12.

At the time of irradiation with ultraviolet lights, water in a stationary state may be irradiated with ultraviolet lights. Specifically, after the space S1 in the container 2 is filled with water, a valve (not illustrated) connected to the inflow port 11 and the outflow port 12 is closed, and the water is irradiated with ultraviolet lights in a state where inflow and outflow of the water are stopped to irradiate the water with ultraviolet lights. Conversely, flowing water may be irradiated with ultraviolet lights. Specifically, in a state where the valve connected to the inflow port 11 and the outflow port 12 is opened (or the valve itself is not provided), water is irradiated with ultraviolet lights while causing the water to flow in and out. In addition, the fluid treatment device may repeat the operation of causing once-treated water to flow in, that is, circulating the water. The decomposition capacity of the organic matter in the water may be enhanced with this configuration.

The container 2 shields ultraviolet lights emitted from the light-emitting tube 1. This prevents ultraviolet lights from transmitting through the container 2 and leaking out of the container 2. All the constituent materials of the container 2 do not need to exhibit light-shielding properties against ultraviolet lights. For example, the light-shielding film may be formed on the inner surface or the outer surface of the container 2 having translucency. The light-shielding film formed on the container 2 may be the same film as a conductive film (details will be described later) formed on the container 2, or may be a film different from the conductive film.

The light-emitting tube 1 is inserted into a hole formed in the container 2. In the present embodiment, the light-emitting tube 1 is inserted to cause the entire light-emitting tube 1 to be located in the container 2. The fluid treatment device 100 has a base 7 for fixing the light-emitting tube 1 to the container 2. The light-emitting tube 1 is supported on one side, that is, the light-emitting tube 1 is supported by the base 7 only at one end. The base 7 is disposed outside the container 2. The base 7 supports one end of light-emitting tube 1. The base 7 covers and closes the hole to prevent water in the container 2 from leaking from the fluid treatment device. In addition, the base 7 has a hole through which a conductive wire 4 passes.

The base 7 has a groove on a surface in contact with the container 2, and a sealing member 8 such as an O-ring is fitted into the groove. Because the sealing member 8 is located between the base 7 and the container 2, water can be prevented from leaking from a gap between the base 7 and the container 2. As described above, the base 7 has a role of fixing the light-emitting tube 1 to the container 2 and a role of preventing water from leaking from the hole provided in the container 2. In the present embodiment, because the container 2 shields ultraviolet lights, the sealing member 8 is hidden behind the container 2 and the ultraviolet lights do not easily hit the sealing member 8, and as a result, the sealing member 8 is not easily deteriorated by the ultraviolet lights.

An adhesive 9 is used to bond the light-emitting tube 1 to the base 7. The adhesive 9 is located between the light-emitting tube 1 and the base 7. In the present embodiment, the adhesive 9 is provided to cover a portion where a metal wire (to be described in detail later) to be a first electrode 3 protrudes from the light-emitting tube 1 and one end of the light-emitting tube 1.

### [Light-shielding material]

The fluid treatment device 100 includes a light-shielding material for preventing leakage of ultraviolet lights to the outside of the container 2, separately from the container 2 having light-shielding properties. This is because the container 2 cannot block ultraviolet lights leaking from the hole into which the light-emitting tube 1 is inserted. Instead of the container 2, the light-shielding material shields the ultraviolet lights leaking from the hole.

Unless otherwise specifically stated, the "light-shielding material" herein is a concept including a member having another function provided with a light-shielding function, a light-shielding film formed on a surface of the member having another function, a light-shielding plate separate from the member having another function, and the like. The light shielded by the light-shielding material is at least ultraviolet lights having a wavelength of equal to or less than 200 nm among the light emitted from the light-emitting tube 1. The "light shielding" herein refers to a state in which the transmittance of light is 10% or less, the light having a specific wavelength (for example, a wavelength having the highest light intensity) among wavelengths of equal to or less than 200 nm.

In the present embodiment, there are two light-shielding materials: a first light-shielding material and a second light-shielding material. The first light-shielding material is the base 7 itself. The base 7 shields ultraviolet lights. In a case where the base 7 does not shield the ultraviolet lights, a material that shields the ultraviolet lights may be formed on the surface of the base 7. As a modification, the first light-shielding material may be a light-shielding film sandwiched between the light-emitting tube 1 and the base 7. The light-shielding film is fixed, for example, by attaching the light-emitting tube 1 to the base 7 in a state where the light-shielding material is sandwiched between the light-emitting tube 1 and the base 7. As a further modification, after the base 7 is fixed to the container 2, a light-shielding plate separate from the base 7 may be attached to cover the base 7.

The second light-shielding material is the adhesive 9. As described above, the base 7 has the hole 10 through which the conductive wire 4 passes. Even in a case where the base 7 functions as a light-shielding material, there is a possibility that ultraviolet lights leak from the hole 10. However, by the adhesive 9 having a function of shielding ultraviolet lights, the ultraviolet lights can be prevented from leaking from the hole 10. In order to impart the ultraviolet light shielding function to the adhesive 9, a material that shields ultraviolet lights (for example, metal material powder) is preferably included in a material constituting the adhesive 9.

In the present embodiment, the light-shielding material includes two light-shielding materials: the first light-shielding material and the second light-shielding material. However, the light-shielding material may include only one of the first light-shielding material and the second light-shielding material. The light-shielding material prevents ultraviolet lights from leaking out of the container 2. When ultraviolet lights leak, oxygen in the atmosphere around the fluid treatment device is activated to generate ozone. There is a possibility that the generated ozone deteriorates the fluid treatment device 100 or peripheral devices located near the fluid treatment device 100. Furthermore, in a case where the concentration of ozone is high, there is a possibility that ozone adversely affects the human body. By preventing the ultraviolet lights from leaking, deterioration of the fluid treatment device 100 or peripheral devices located in the vicinity of the fluid treatment device 100 is suppressed to prevent the human body from being adversely affected.

As a more preferable mode, the light-shielding material is formed in the entire region (not limited to the hole provided in the container) where the ultraviolet lights possibly leak. As a specific example, the light-shielding material is disposed at a position where a path through which ultraviolet lights propagate from the inside of the container to the outside of the container is blocked. In addition, it is desirable to form the light-shielding material such that there is no portion where ultraviolet lights come into contact with the air outside the container, or, in a case where there is a portion where ultraviolet lights come into contact with the air outside the container, it is desirable to form a light-shielding portion to close the portion. This prevents generation of ozone itself or prevents the generated ozone from flowing out of the container.

Fig. 2 is an enlarged view of an A1 region in Fig. 1. In the present embodiment, because a part of the base 7 is located between the adhesive 9 and the container 2, the adhesive 9 is designed not to come into contact with water filled in the container 2. However, a minute gap 21 is formed in some cases between the light-emitting tube 1 and the base 7 in order to give play to the base 7 for fitting the light-emitting tube 1. In addition, there is a case where the water filled in the space S1 enters the gap 21 and comes into contact with the adhesive 9. Depending on the type of the adhesive 9, there is a possibility that the components of the adhesive 9 dissolve out by the adhesive 9 coming into contact with water. The dissolution of the components of the adhesive 9 into water is not preferable for the fluid treatment device intended for pure water production.

Therefore, the adhesive 9 preferably includes components that do not dissolve out even by coming into contact with water. In a case where the TOC concentration is to be set to an extremely low level, it is preferable to use an inorganic adhesive rather than an organic adhesive as the adhesive 9. Examples of the inorganic adhesive include alumina, silica, magnesium oxide, zirconium oxide, or a mixture containing at least two of these materials.

Note that, as the material of the base 7, metal, resin, glass, or a ceramic-based material is preferably used. As a material of the base 7, it is preferable to use a material which does not easily deteriorate by ultraviolet lights, does not easily dissolve out into water, and resists heat of the light-emitting tube 1. Suitable materials for the base 7 include alumina, steatite, zirconium oxide, aluminum nitride, silicon nitride, and silicon carbide. In addition, the same material as or a similar material to the material of the adhesive 9 is preferably used as the material of the base 7 in order to enhance the adhesiveness of the adhesive 9 to the base 7.

In addition, in order to reduce the gap 21 itself, the base 7 may be constituted of a flexible material, and an insertion opening of the base 7 for the light-emitting tube 1 may be designed to be small to such an extent that the light-emitting tube 1 can be inserted while bending the base 7, so that water does not enter the gap 21 as much as possible. In addition, a sealing material (not illustrated) may be inserted into the gap 21 so that the water in the space S1 does not come into contact with the adhesive 9 through the gap 21.

### [Light-emitting tube]

The light-emitting tube 1 has a cylindrical shape. A light-emitting gas G1 is sealed inside the light-emitting tube 1. A long first electrode 3 is inserted into the light-emitting tube 1 along the tube axis direction of the light-emitting tube 1. The conductive wire 4 extends from the first electrode 3 toward the outside of the light-emitting tube 1 and is connected to a power supply 6. The power supply 6 provides an added voltage. In the present embodiment, the first electrode 3 is a metal wire. The metal wire functions as the first electrode 3 for applying a lighting voltage via the conductive wire 4. Although the metal wire is illustrated in a linear shape, the metal wire may have a curved shape or a spiral shape (coil shape). The diameter of the metal wire is preferably, for example, equal to more than 0.1 mm and equal to or less than 3 mm, and particularly preferably equal to or more than 0.2 mm and equal to or less than 1 mm. The metal wire may be a large-diameter rigid metal rod. Note that the first electrode 3 may be present only in the light-emitting tube 1, and the conductive wire 4 extending from the first electrode 3 may constitute a portion that is exposed outside the light-emitting tube 1.

The container 2 is composed of a conductive material, and the conductive wire 5 extends from the container 2. The conductive wire 5 is grounded. The container 2 functions as a second electrode connected to the ground side. The light-emitting gas G1 and water are disposed so as to be sandwiched between the first electrode 3 (metal wire) and the container 2 as the second electrode. When a voltage is applied between the first electrode 3 and the container 2 as the second electrode by the power supply 6 in a state where the container 2 is filled with water, dielectric barrier discharge occurs in the light-emitting tube 1 via water having impedance. As a result, ultraviolet lights are emitted from the light-emitting gas G1, and the water stored in the container 2 is irradiated with ultraviolet lights.

Because the container 2 functions as the second electrode, the container 2 according to the present embodiment is constituted of a conductive material. However, all the constituent materials of the container 2 may not have conductivity. For example, a conductive film may be formed on the inner surface of the container 2 having insulating properties to constitute the second electrode.

In the present embodiment, xenon (Xe) gas is sealed as the light-emitting gas G1. Excimer light emitted from the xenon gas mainly includes ultraviolet lights having a wavelength of 172 nm. In the present description, the "ultraviolet lights having a wavelength of 172 nm" represents light having a wavelength at which the maximum intensity is exhibited in the optical spectral distribution of 172 nm. The light-emitting gas G1 is appropriately selected in accordance with a desired wavelength to be used. As the light-emitting gas G1, for example, another rare gas such as an argon (Ar) gas or a krypton (Kr) gas may be used. Furthermore, as the light-emitting gas G1, a halogen gas such as a fluorine gas (F₂), a chlorine gas (Cl₂), an iodine gas (I₂), or a bromine gas (Br₂) may be used. In addition, a mixed light-emitting gas obtained by mixing a plurality of types of the above-described gases may be used.

It is preferable that the light emitted from the light-emitting tube 1 mainly include ultraviolet lights having a wavelength of equal to or less than 200 nm. "Mainly including a wavelength of equal to or less than 200 nm" indicates that, in the light intensity spectrum distribution, an integrated value obtained by integrating the light intensity at a wavelength of equal to or less than 200 nm is in a state of being larger than an integrated value obtained by integrating the light intensity at a wavelength exceeding 200 nm. A material of the light-emitting tube 1 is selected from materials that transmit a wavelength band of ultraviolet lights to be used. In the present embodiment, quartz glass that transmits ultraviolet lights having a wavelength of equal to or less than 200 nm is used for the light-emitting tube 1.

### <Second embodiment>

A second embodiment of a fluid treatment device will be described. Hereinafter, differences from the first embodiment will be mainly described. In the second embodiment, in a case where a configuration is similar to that of the first embodiment, the description of the second embodiment is omitted in some cases. The same applies to the third and subsequent embodiments.

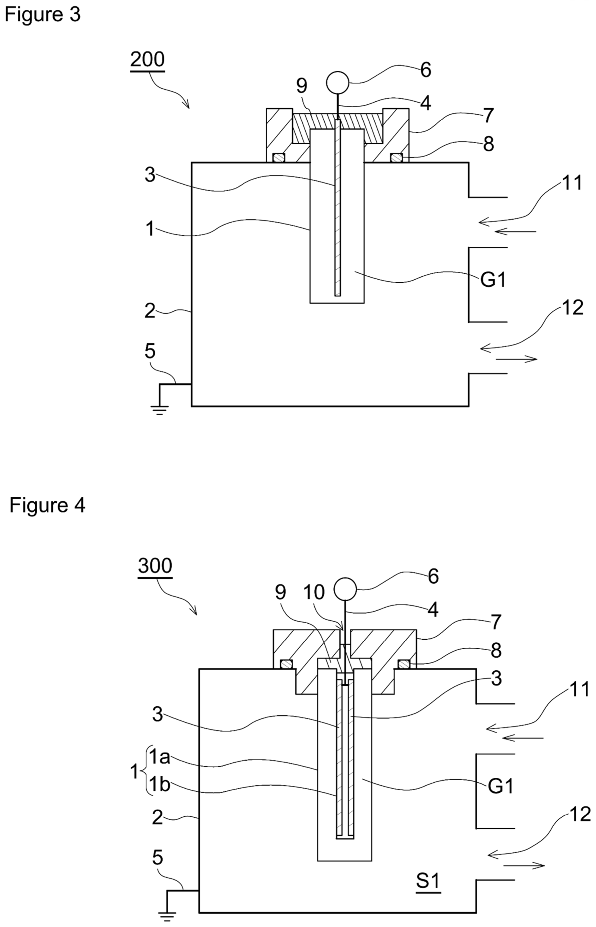

Fig. 3 is a diagram illustrating a configuration of a fluid treatment device 200 which is the second embodiment. In the first embodiment, the light-emitting tube 1 is inserted to cause the entire light-emitting tube 1 to be located in the container 2, but in the present embodiment, a light-emitting tube 1 is disposed across the inside and the outside of a container 2 such that a part of the light-emitting tube 1 is located outside the container 2. A high voltage is applied to a first electrode 3 inside the light-emitting tube 1. If water enters a portion where the first electrode 3 extends out from the light-emitting tube 1, there is a risk of electric leakage. However, in a case where the light-emitting tube 1 is disposed across the inside and the outside of the container 2 as in the present embodiment, because the portion where the first electrode 3 extends out from the light-emitting tube 1 is located away from the water in the container 2, the risk of electric leakage can be reduced.

In addition, because a base 7 forms a reservoir for an adhesive 9 and the portion where the first electrode 3 extends out from the light-emitting tube 1 is in the reservoir for the adhesive 9, the risk of water entering the portion where the first electrode 3 extends out from the light-emitting tube 1 can be further reduced. Further, in the present embodiment, the light-emitting tube 1 can be reliably fixed to the base 7 with a large amount of the adhesive 9.

### <Third embodiment>

A third embodiment of a fluid treatment device will be described. Fig. 4 is a diagram illustrating a configuration of a fluid treatment device 300 which is the third embodiment. In the fluid treatment device 300, a light-emitting tube 1 is constituted of a double tube including an outer tube 1a and an inner tube 1b disposed in the outer tube 1a. A first electrode 3 is formed in contact with the entire 360 degrees of the inner wall of the inner tube 1b. A space between the outer wall of the inner tube 1b and the inner wall of the outer tube 1a is a space in which the light-emitting gas is sealed. At an end not in contact with a base 7 of the light-emitting tube 1, the inner tube 1b is sealed, and the light-emitting gas does not enter inside the inner tube 1b.

### <Fourth embodiment>

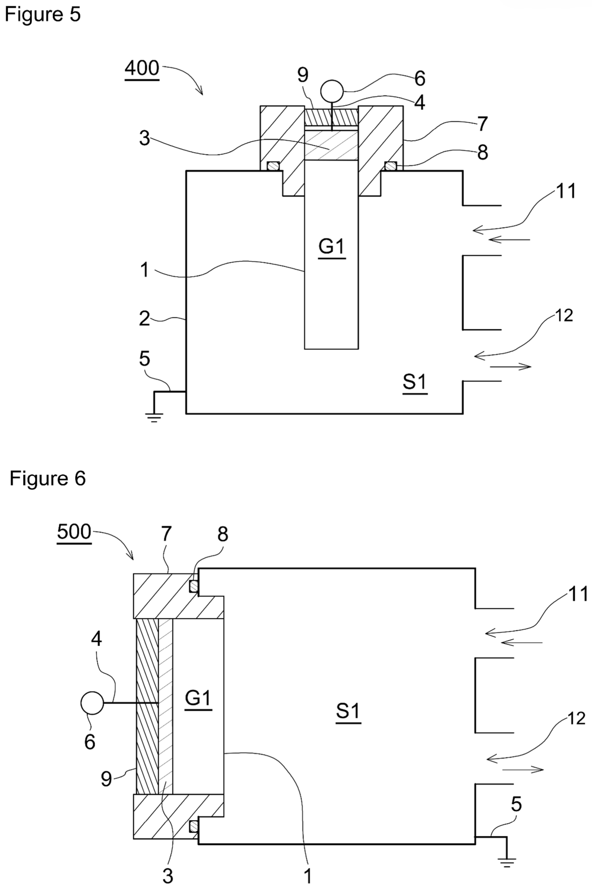

A fourth embodiment of a fluid treatment device will be described. Fig. 5 is a diagram illustrating a configuration of a fluid treatment device 400 which is the fourth embodiment. In the fluid treatment device 400, a first electrode 3 is located to be in contact with the base of a light-emitting tube 1. The first electrode 3 is located outside the light-emitting tube 1. An adhesive 9 covers the outside of the first electrode 3. Fig. 6 is a diagram illustrating a configuration of a fluid treatment device 500 which is a modification of the fourth embodiment. In the fluid treatment device 500, the light-emitting tube 1 does not protrude from a base 7, and the contact area with water is secured. The first electrode 3 is located outside the light-emitting tube 1. An adhesive 9 covers the outside of the first electrode 3.

### <Fifth embodiment>

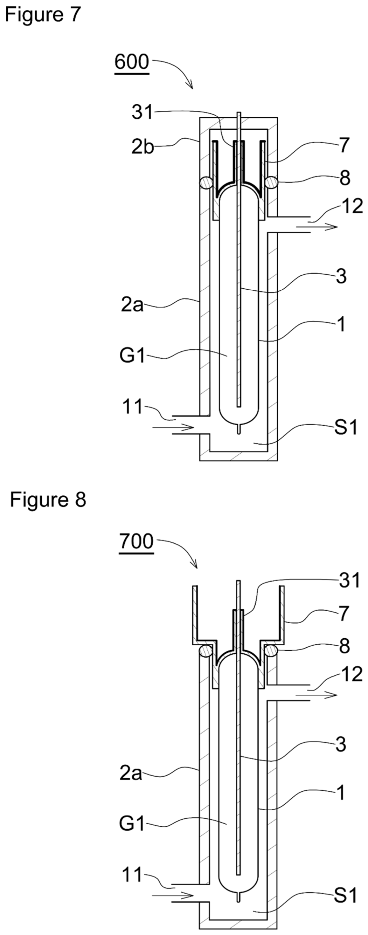

A fifth embodiment of a fluid treatment device will be described. Fig. 7 is a diagram illustrating a configuration of a fluid treatment device 600 which is the fifth embodiment. The fluid treatment device 600 includes a first container 2a and a second container 2b. The second container 2b is in contact with the first container 2a while interposing a sealing member 8 therebetween. The first container 2a has a pipe shape extending in one direction. A light-emitting tube 1 is in the first container 2a. There is no light-emitting tube 1 inside the second container 2b, and water does not enter the inside of the second container 2b. A base 7 is disposed across the first container 2a and the second container 2b. A light-shielding material 31 is formed in a film shape on the inner wall of the base 7. The second container 2b may have light-shielding properties or light-shielding properties. In the fluid treatment device 600, it is preferable to irradiate flowing water with ultraviolet lights while allowing the water to flow in from an inflow port 11 and discharging the water from the outflow port 12. At the time of inspecting, repairing, or replacing the light-emitting tube 1, the light-emitting tube 1 is turned off, the second container 2b is separated from the first container 2a, and the light-emitting tube 1 and the base 7 are taken out. In the present embodiment, no adhesive is used.

Fig. 8 is a diagram illustrating a configuration of a fluid treatment device 700 which is a first modification of the fifth embodiment. The fluid treatment device 700 does not include the second container 2b of the fluid treatment device 600, and a base 7 serves as a substitute for the second container 2b. A light-shielding material 31 is formed in a film shape on the inner wall of the base 7. In the present embodiment, no adhesive is used.

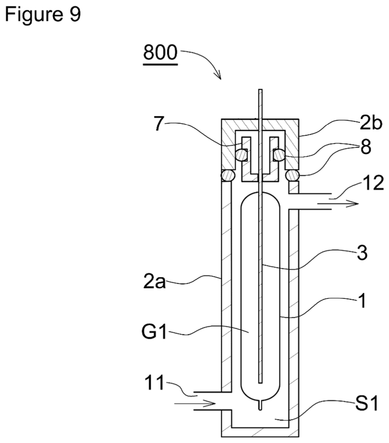

Fig. 9 is a diagram illustrating a configuration of a fluid treatment device 800 which is a second modification of the fifth embodiment. The fluid treatment device 800 includes the first container 2a and the second container 2b. The second container 2b is in contact with the first container 2a while interposing a sealing member 8 therebetween. The first container 2a has a pipe shape extending in one direction. A light-emitting tube 1 is in the first container 2a. Water does not enter the upper part of the base 7. The base 7 includes a light-shielding material and shields ultraviolet lights. The second container 2b may have light-shielding properties or light-shielding properties.

The embodiments and the modifications of the fluid treatment device have been described above. However, the present invention is not limited to the embodiments described above, and the embodiments and the modifications described above may be combined, and various changes or improvements may be made to the embodiments or the modifications described above without departing from the spirit of the present invention.

In the fluid treatment device described in each of the above embodiments, the container or the second electrode disposed in contact with the container is grounded (that is, the potential thereof is zero), but the second electrode may not be grounded, that is, may not have a zero potential. In addition, both the first electrode and the second electrode may be disposed inside the light-emitting tube 1.

Although an example in which the O-ring is used as the above-described sealing member 8 has been described, for example, another sealing member such as a packing having another shape (C-ring, T-ring, or the like) or a gasket may be used. Furthermore, in the present embodiment, the sealing member 8 is not an essential component, and the sealing member 8 is not necessarily required as long as the fluid treatment device is used in an environment in which water does not leak or water is allowed to leak only a little.

### DESCRIPTION OF REFERENCE SIGNS

- 1: Light-emitting tube
- 1a: Outer tube
- 1b: Inner tube
- 2: Container
- 2a: First container
- 2b: Second container
- 3: First electrode
- 4: Conductive wire (connected to first electrode)
- 5: Conductive wire (connected to second electrode)
- 6: Power supply
- 7: Base
- 8: Sealing member
- 9: Adhesive
- 10: Hole
- 11: Inflow port
- 12: Outflow port
- 21: Gap
- 31: Light-shielding material
- 100, 200, 300, 400, 500, 600, 700, 800: Fluid treatment device
- G1: Light-emitting gas
- S1: Space

## Claims

1. A fluid treatment device comprising:
a light-emitting tube;
a light-emitting gas that is sealed in the light-emitting tube and emits an ultraviolet light having a wavelength of equal to or less than 200 nm by dielectric barrier discharge;
a container that has a hole into which the light-emitting tube is inserted, houses a fluid to be treated with the ultraviolet light, and shields the ultraviolet light;
a pair of electrodes disposed to sandwich the light-emitting gas;
a base that fixes the light-emitting tube to the container in a state where the light-emitting tube is inserted into the hole; and
a light-shielding material that prevents the ultraviolet light from leaking out of the container.

2. The fluid treatment device according to claim 1, wherein
the light-emitting tube is bonded to the base with an adhesive, and
the light-shielding material is included in the adhesive.

3. The fluid treatment device according to claim 2, wherein the base may have a part of the base located between the adhesive and the container.

4. The fluid treatment device according to claim 3, wherein the adhesive is an inorganic adhesive.

5. The fluid treatment device according to claims 1 to 4, wherein the light-emitting tube is disposed across an inside and an outside of the container.

6. The fluid treatment device according to any one of claims 1 to 4, wherein the pair of electrodes is disposed to sandwich the fluid.

7. The fluid treatment device according to claim 6, wherein
the pair of electrodes includes a first electrode located inside the light-emitting tube and a second electrode located outside the container.

8. The fluid treatment device according to any one of claims 1 to 4, wherein the base and the container have a sealing member provided between the base and the container.
